# EUROPEAN PATENT SPECIFICATION

(11) **EP 3 199 012 B1**
(45) Date of publication and mention of the grant of the patent: **15.01.2020**
(21) Application number: 15845162.5
(22) Date of filing: 23.09.2015
(51) Int. Cl.: A01D 75/00, A01B 51/00, A01D 67/00, A01B 59/00, A01B 51/04

(54) **REAR SUPPORT**
HECKSTÜTZE
SUPPPORT ARRIÈRE

(30) Priority: 24.09.2014 ES 201431240 U
(43) Date of publication of application: 02.08.2017
(73) Proprietor: Agromelca, S.L., 44610 Teruel (ES)
(72) Inventor: IBAÑEZ DOLZ, David, 44610 Teruel (ES)
(74) Representative: Schäfer, Matthias W.
(86) International application number: PCT/ES2015/070697
(87) International publication number: WO 2016/046444

(56) References cited:
- WO-A2-2007/084524
- ES-U- 1 059 232
- ES-U- 1 068 323
- FR-A1- 3 001 609
- GB-A- 586 624
- NL-A- 8 702 775
- US-A- 5 366 336

## Description

### Object of the invention

The present description relates, as its title indicates, to a rear support for coupling to a tubular structure of a frame, comprising a U-shaped structure formed by two sides and a bottom, secured to the said tubular structure by securing means and a complementary L-shaped support.

The purpose of the invention is to provide a securely connected rear support that does not require welding and is applicable to tractors and harvesting machines with built-in harvester umbrellas.

### Background of the invention

At present a tubular structure for aluminium frame, described in Spanish utility model U200801406 is known, configured by an upper tubular platform and a lower tubular platform, joined by tubular structural sections that endow it with great resistance to stress.

In order to facilitate the attachment of the said structure to a towing vehicle, an attempt has been made to incorporate a rear support by welding, but this connection is insufficient for the stress that it must withstand during work operations.

US 5366336 (A) describes a rod assembly coupled between towed implement hitch and ground wheel axle. A towed rotary cutter has a main frame defined by the cutter housing supported at its rear by ground wheels that are coupled to the frame through means of a pivotably mounted axle. A hitch is pivotally mounted at the front end of the frame and carries a clevis assembly at the forward end thereof. A pair of parallel, transversely spaced leveling rods extend between the hitch and wheel axle with the rear ends of the rods being defined by eyes that are received on respective pins formed integrally with the opposite ends of a cylindrical equalizer bar that is pivotally mounted to the axle.

GB 586624 (A) describes a tractor for garden cultivators and other implements. A garden tractor or the like has a wheeled main frame and means whereby an implement may be attached. The tractor may be wheeled into the implement and connected by screws on pins with spacing tubes mounted on the implement structure. A reaping machine may be attached, including a reciprocating mechanism for working the blades over one another which is driven by a belt and the action of levers is used as a belt tightener.

FR 3001609 (A1) relates to a haymaking machine comprising a chassis supported on the ground by wheels and a working device connected to the chassis, the chassis comprising a coupling device to which are articulated two coupling pieces each carrying a pin for coupling to the respective lower arms of a tractor.

NL 8702775 (A) relates to an agricultural tractor coupling mechanism having two parallel beams with two groups of holes with centre lines crossing each other vertically.

Another problem to be solved is that the rear support, in addition to having great strength, must be structured to make it easy and quick to mount and dismantle in order to try to reduce operating costs as much as possible, which means that a welded support is a drawback.

### Description of the invention

To solve the aforementioned problems, a rear support of great strength, easy and quick to mount and dismantle has been devised, which when secured by means of bolts to the tubular structure of the frame, allows totally safe and effective connection to the tractor hitch. Such a rear support is provided by a device having the features of claim 1. Advantageous embodiments are described in the dependent claims.

The tubular structure described in Spanish utility model U200801406 is cited merely as a reference, as the rear support that is the object of the present invention is applicable to structures with a similar configuration or function but with differences to the aforementioned.

The rear support, specially designed for coupling to a tubular structure for frame, reinforcing its connection with the hitch of a towing vehicle, is comprised of a U-shaped structure formed by two sides and a bottom, the two sides being formed by lugs on the upper and lower part, both lugs having a through-hole in their middle part, intended for the connection to the towing vehicle hitch, both lugs being joined together by means of a recess formed by a radial section.

The bottom incorporates, on its upper and lower part, two holes, separated from each other at an equidistant distance, intended for its secure connection by means of bolts.

The bottom, on its upper part, has an L-shaped welded support, which, at its free end, has two through-holes placed in line with the holes positioned on the upper part of the bottom.

In cooperation with the rear support, a complementary L-shaped support is incorporated for its attachment on to the tubular structure of the frame, the said L-shaped support being positioned in line with the lower part of the rear support and having two holes at its free end that are in line with the holes positioned on the lower part of the bottom of the rear support.

The incorporation of this complementary L-shaped support ensures greater flexibility in the connection with the towing vehicle hitch.

Mounting is easy to implement, as the rear support is positioned on each of the rear structural tubular sections of the tubular structure, placing the L-shaped support on the upper tubular platform, securing the position with two bolts with their corresponding spring washers, passing through the structure of the frame and the complementary L-shaped support and securing attachment by means of spring washers and nuts and by means of the corresponding tightening torque.

Once the position of the rear support is fixed on the upper tubular platform, the lower complementary L-shaped support is positioned on the lower tubular platform of the tubular structure of the frame, securing the position by means of two through-bolts with their corresponding spring washers, passing through the complementary L-shaped support and securing attachment by means of spring washers and nuts and by means of the corresponding tightening torque.

### Advantages of the invention

The rear support presented affords several advantages, the most important being that it guarantees greater resistance to stress, avoiding possible breakages.

Another important added advantage is that the incorporation of the rear support guarantees quick, easy mounting and dismantling at the connection to the towing vehicle hitch, thus achieving a great reduction in operating costs.

### Description of the figures

To afford a better understanding of this invention, a preferred practical embodiment is shown in the drawing attached.
Figure -1- shows a top, side and elevation view of the rear support.
Figure -2- shows a side and elevation view of the complementary L-shaped support.
Figure -3- shows a perspective view of a tubular structure for frame.
Figure -4- shows a detail of the view of the front of the tubular structure for frame with the rear supports positioned and secured.
Figure -5- shows a sectional detail of the mounting of the rear support.

### Preferred embodiment of the invention

The conformation and characteristics of the invention can be better understood in the following description that relates to the attached figures.

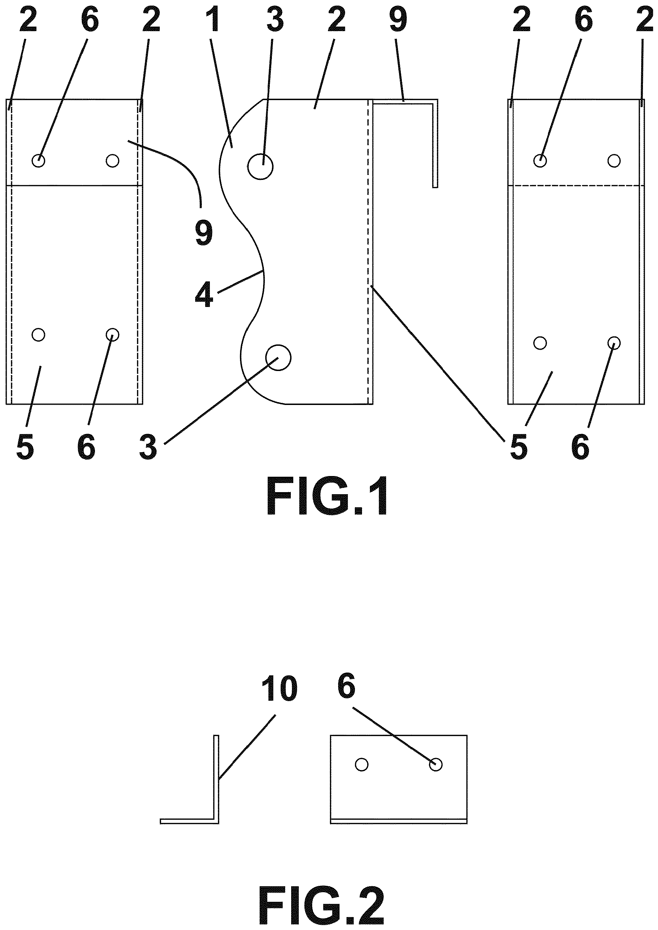

As can be seen in figure 1, a rear support (1) is shown, configured by a U-shaped structure, indicating the sides (2) formed by lugs on the upper and lower part, having a through hole (3) in their middle part, intended for connection with the towing vehicle hitch, both lugs being joined together via the recess formed by a radial section (4).
Also shown is the bottom (5) which incorporates on its upper and lower part, two holes (6) separated from each other at an equidistant distance, which are intended for its fastening by means of bolts (7), spring washers (11) and nuts (12).
The bottom (5) incorporates on its upper part, an L-shaped welded support (9), which has, at its free end, two through-holes (6), placed in line with the holes (6) positioned on the upper part of the bottom (5).

Figure 2 shows an L-shaped support (10) intended for securing the rear support (1) on to the tubular structure (8), indicating two through holes (6) at its free end, which are positioned in line with the through holes (6) of the lower part of the bottom (5), to facilitate the securing of the bolts (7).

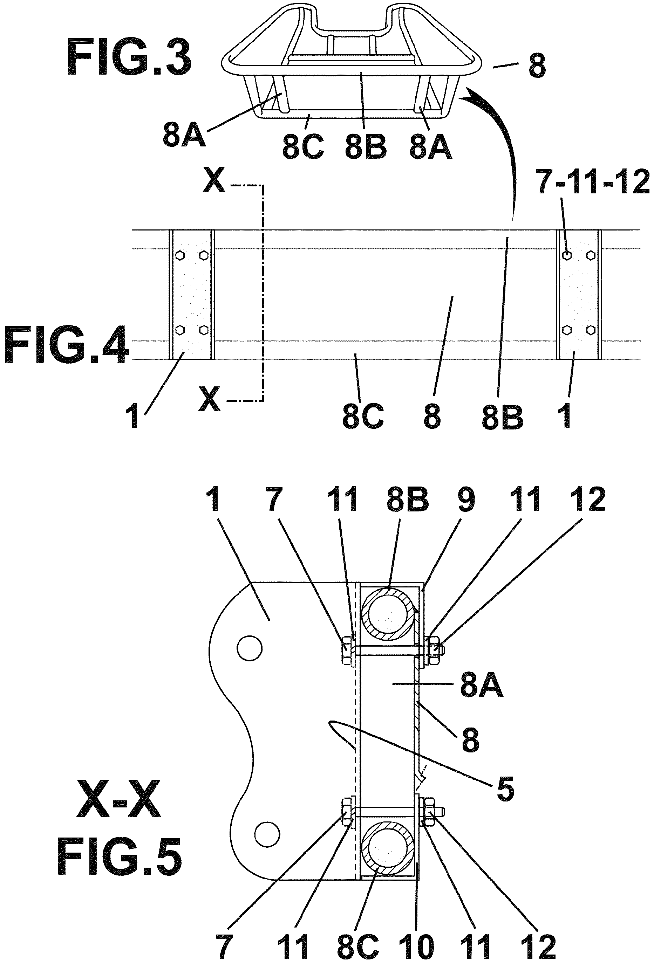

Figure 3 shows a perspective view of a tubular structure for frame (8), showing details of the upper tubular platform (8B), the lower tubular platform (8C) and the tubular structural sections (8A) that will serve as a reference for the positioning of the rear supports (1).

Figure 4 shows a schematic front view of the tubular structure for frame (8), indicating the upper tubular platform (8B) and the lower tubular platform (8C), positioning the corresponding rear supports (1) on the tubular structural sections (8A), via bolts (7), spring washers (11) and nuts (12).
Also shown is a section of the tubular structure for frame (8), indicated by "x-x", to provide details of the mounting details of the rear support (1).

Figure 5 shows the construction details of the mounting of the rear support, indicated in the "x-x" section, showing in cross-section, the upper tubular platform (8B) and the lower tubular platform (8C), the tubular structure remaining coupled at the bottom (5) of the rear support (1) in collaboration with the L-shaped support (9), positioned on the upper tubular platform (8B) and the L-shaped support (10) positioned on the lower tubular platform (8C), maintaining the position by means of the fastening of the corresponding bolts (7), spring washers (11) and nuts (12).
It shows the mounting of the rear support (1) positioned on the rear tubular structural sections (8A) of the tubular structure (8), positioning the L-shaped support (9) of the rear support (1) on the upper tubular platform (8B), the position being fixed by means of two bolts (7) with their corresponding spring washers (11), passing through the structure of the frame and of the L-shaped support (9) and being secured by means of spring washers (11) and nuts (12) by means of the corresponding tightening torque.
Once the position of the rear support (1) is fixed on the upper tubular platform (8B), the lower complementary L-shaped support (10) is positioned on the lower tubular platform (8C), fixing the position by means of two bolts (7) with their corresponding spring washers (11), passing through the complementary L-shaped support (10) and being secured by means of spring washers (11) and nuts (12) by means of the corresponding tightening torque.

## Claims

1. Rear support for coupling to a tubular structure of a frame, wherein the support comprises a U-shaped structure formed by two sides (2) and a bottom (5), wherein the bottom (5) incorporates on its upper and lower part, two holes (6) separated from each other at an equidistant distance, and the two sides (2) being formed by lugs on the upper and lower part, having a through-hole (3) in their middle part, intended for connection to the towing vehicle hitch, both lugs being joined together by means of a recess formed by a radial section (4), **characterised in that** the bottom (5) has, on its upper part, an L-shaped welded support (9), which has, at its free end, two through-holes (6), placed in line with the holes (6) positioned on the upper part of the bottom (5).

2. Rear support, according to claim 1, **wherein** in cooperation with the rear support, there is incorporated for its attachment on to the tubular structure (8) of the frame, a complementary L-shaped support (10) that is positioned in line with the lower part of the rear support, having two through holes (6) at its free end, positioned in line with the through holes (6) on the lower part of the bottom (5).

3. Rear support, according to any of the preceding claims, **wherein** it incorporates, as the means of securing the rear support, on the rear structural tubular sections (8A), on the upper tubular platform (8B) and on the lower tubular platform (8C) of the tubular structure (8), bolts (7), spring washers (11) and nuts (12) in collaboration with an L-shaped welded support (9) of the rear support (1) and complementary L-shaped support (10).

## Patentansprüche

1. Hintere Halterung zum Verbinden mit einer rohrförmigen Struktur eines Rahmens, wobei die Halterung eine U-förmige Struktur aufweist, welche von zwei Seiten (2) und einem Boden (5) gebildet ist, wobei der Boden (5) an seinem unteren und oberen Teil zwei in einem äquidistanten Abstand von einander getrennte Löcher (6) enthält, und wobei die beiden Seiten (2) von Laschen an dem oberen und unteren Teil gebildet sind, welche ein Durchgangsloch (3) in ihrem mittleren Teil aufweisen, welches zur Verbindung mit der Anhängerkupplung des Zugfahrzeugs vorgesehen ist, wobei beide Laschen mittels einer Ausnehmung miteinander verbunden sind, welche von einem radialen Ausschnitt (4) gebildet ist, **dadurch gekennzeichnet, dass** der Boden (5) an seinem oberen Teil eine L-förmige, geschweißte Halterung (9) aufweist, welche an ihrem freien Ende zwei Durchgangslöcher (6) aufweist, welche fluchtend mit den Löchern (6), welche an dem oberen Teil des Bodens (5) positioniert sind, angeordnet sind.

2. Hintere Halterung nach Anspruch 1, **wobei** in Zusammenwirkung mit der hinteren Halterung für deren Anbringung an der rohrförmigen Struktur (8) des Rahmens eine komplementäre L-förmige Halterung (10) enthalten ist, welche fluchtend mit dem unteren Teil der hinteren Halterung positioniert ist, welche zwei Durchgangslöcher (6) an ihrem freien Ende aufweist, welche fluchtend mit den Durchgangslöchern (6) an dem unteren Teil des Bodens (5) positioniert sind.

3. Hintere Halterung nach einem der vorhergehenden Ansprüche, **wobei** sie als Mittel zur Befestigung der hinteren Halterung an den hinteren strukturellen rohrförmigen Abschnitten (8A) an der oberen rohrförmigen Plattform (8B) und an der unteren rohrförmigen Plattform (8C) der rohrförmigen Struktur (8) Schrauben (7), Federringe (11) und Muttern (12) in Zusammenwirkung mit einer L-förmigen, geschweißten Halterung (9) der hinteren Halterung (1) und komplementären L-förmigen Halterung (10) enthält.

## Revendications

1. Un support arrière pour le couplage à la structure tubulaire d'un cadre, étant précisé que le support comprend une structure en forme de U formée par deux côtés (2) et un fond (5), étant précisé que le fond (5) comprend, sur sa partie supérieure et sa partie inférieure, deux orifices (6) séparés à équidistance l'un de l'autre, et les deux côtés (2) étant formés par des ergots sur la partie supérieure et la partie inférieure, présentant un trou traversant (3) en leur partie centrale, prévu pour le couplage au dispositif d'attelage d'un véhicule de remorquage, les deux ergots étant joints l'un à l'autre au moyen d'un renfoncement formé par la section radiale (4), **caractérisé en ce que** le fond (5) présente, sur sa partie supérieure, une support soudé en forme de L (9) qui présente, en son extrémité libre, deux orifices (6) placés sur la même ligne que les orifices (6) positionnés sur la partie supérieure du fond (5).

2. Le support arrière conformément à la Revendication 1, **étant précisé qu'**en interaction avec le support arrière, pour la fixation sur la structure tubulaire (8) du cadre, il existe un support additionnel en forme de L (10) positionné sur la même ligne que la partie inférieure du support arrière, qui présente, en son extrémité libre, deux orifices (6) placés sur la même ligne que les orifices (6) sur la partie inférieure du fond (5).

3. Le support arrière conformément à l'une quelconque des Revendications précédentes, **étant précisé qu**'il comprend, comme moyen de sécuriser le support arrière, sur les sections arrières de la structure tubulaire (8A), sur la plateforme tubulaire supérieure (8B) et sur la plateforme tubulaire inférieure (8C) de la structure tubulaire (8), des boulons (7), des rondelles élastiques (11) et des écrous (12) en interaction avec un support soudé en forme de L (9) du support arrière (1) et un support additionnel en forme de L (10).
